# EUROPEAN PATENT SPECIFICATION

(11) **EP 3 541 558 B1**
(45) Date of publication and mention of the grant of the patent: **02.03.2022**
(21) Application number: 17800389.3
(22) Date of filing: 09.11.2017
(51) Int. Cl.: B23K 9/013, B23K 9/16, B23K 9/167, B23K 35/38

(54) **METHOD OF CLEANING A WORKPIECE AFTER A THERMAL JOINING PROCESS WITH CATHODIC CLEANING ; CLEANING DEVICE**
VERFAHREN ZUR KATHODISCHEN REINIGUNG EINES WERKSTÜCKES NACH EINEM THERMISCHEN VERBINDEN ; REINIGUNGSEINRICHTUNG
PROCÉDÉ DE NETTOYAGE CATHODIQUE D'UNE PIÈCE APRÈS UN ASSEMBLAGE THERMIQUE ; DISPOSITIF DE NETTOYAGE

(30) Priority: 18.11.2016 EP 16020454
(43) Date of publication of application: 25.09.2019
(73) Proprietor: Linde GmbH, 82049 Pullach (DE)
(72) Inventor: MIKLOS, Ernst, 85551 Kirchheim (DE); SIEWERT, Erwan, 85283 Niederlauterbach (DE); SAVGU, Fatih, 85757 Karlsfeld (DE)
(74) Representative: Lu, Jing
(86) International application number: PCT/EP2017/025330
(87) International publication number: WO 2018/091147

(56) References cited:
- EP-A1- 1 512 482
- JP-A- S58 154 460
- JP-A- 2003 181 679
- JP-A- 2003 201 587
- US-A- 5 641 417

## Description

The present invention concerns a method of and a cleaning device for cleaning a surface of a workpiece after a thermal joining process according to the preamble of claims 1 and 9 respectively (see for example JP 2003/181679 A), wherein the cleaning is conducted by removing oxide from the surface of the workpiece which is formed on the weld or the weld heat-affected zone of the workpiece during the previous joining process.

The welding is one of the well-known joining processes by causing fusion. The welding process use an energy sources in a proper way to melt the workpieces to be welded. In addition to melting the workpieces, a filler material is often added to the weld joint to form a pool of molten material that cools to a joint that can be strong, or even stronger than the workpiece itself. Some of the best known welding processes include shielded metal arc welding(SMAW), gas tungsten arc welding(GTAW), gas metal arc welding(GMAW), Flux-cored arc welding(FCAW), submerged arc welding(SAW), electro slag welding(ESW) and so on. Beyond these arc welding variants, other fusion welding technologies use many different energy sources including gas flame, electrical arc, laser, electron beam, ultrasound, friction to adapt to different requirements of joining materials.

In contrast to welding, during brazing or soldering only the filler is melted, while the components to be joined are just heated up in solid state. Nevertheless, even here the joining process generates thermal oxide layers on the surfaces, which can be removed with the present invention. In this document, we use the term "welding" as meaning also comparable thermal joining technologies.

The workpieces to be welded are usually made of metal which will form an oxide layer on its surface in the present of both oxygen and heat. This phenomenon is particular conspicuous during the welding process due to the high temperature of the workpieces and its contact with the atmosphere. This non-uniform oxide layer is performed as a rainbow of colors in the weld or the heat affected zone which is however not desirable as it causes change of the workpiece structure and reduces its corrosion resistance. Therefore, it is required to remove this oxide layer to achieve a better quality of the weld.

There are various methods to remove such oxide layers as like some mechanical treatments which brush or grind the discoloring surface of the workpiece. Those treatments have disadvantages that the oxide layer cannot be removed completely or evenly enough, and in the case that if a contaminated brush or grinding wheel is used, the corrosion resistance of the workpieces will be reduced as well. In addition, a wet-chemical pickling which dips the workpiece into a solution containing acid is used to remove the surface oxide. This method has a great performance which demands however very complicated process to ensure the safety of the operator due to the aggressive chemicals and a post-treatment is necessary to clean the acid off the workpiece. It is therefore very expensive as well as energy-consuming. One further variant known is the wet electrochemical pickling, which also uses wet chemicals (acids) in combination with electrical currents, with all mentioned disadvantages.

It is therefore an aim of the present invention to improve the cleaning method which overcomes the disadvantages in the prior art and provides an application in a more economic and efficient way.

The present invention provide a cleaning method according to claim 1 and a device according to claim 9 to achieve the aforementioned aim.

According to the present invention an electric arc is generated between the joined workpiece and a non-consumable electrode to remove the oxide on the workpiece, wherein a power source is provided to electrically connect the workpiece and the non-consumable electrode and wherein the non-consumable electrode is essentially anodically polarized and the workpiece is essentially cathodically polarized.

By "essentially anodically polarized" it means that the non-consumable electrode is polarized anodically by more than 75% electrical energy in total which is supplied by the power source, preferably more than 85%, more preferably 100% and the workpiece is thus essentially cathodically polarized accordingly.

The power source according to the present invention is configured to provide an alternating current (AC) circuit which has very small anodic portion on the workpiece to be cleaned, maximal 25%, which means the AC circuit sets maximal 25% of the electrical energy in total for weld penetration action, when the workpiece is anodically polarized, and minimal 75% of the energy for cleaning action on the workpiece, when the workpiece is cathodically polarized. This percentage is adjusted by a balance control in the AC circuit. The thus arranged AC circuit is advantageous to be able to control the cleaning depth of the oxide layer and also to control the heat distribution between the electrode and the workpiece to be treated. The power source provides preferably a small current from 5A to 100A, preferable from 10 to 50A and more preferable from 10A to 30A.

The polarity provides a cleaning effect on the workpiece which remove the oxide layer formed on the weld and the adjacent heat affected zone surface. The metallic workpiece and its oxide layer form a dielectric. On the edge of the oxide layer to the workpiece a concentration of electrical field lines occurs to result in a highest density of energy on the cathode. This causes a local vaporization of the material including the oxide layer and a small amount of the underlying workpiece which then leaves the surface of the workpiece free of oxide. Besides, there are another two hypothesis suggested in the literature to explain the cathodic cleaning oxides which are ion bombardment and electron emission.

In the welding process, especially in a welding process with a non-consumable electrode as like GTAW, the workpiece is usually anodic polarized which produces more heat than the electrode and thus built a high heat concentration on the workpiece to facilitate its melting and achieve a deep penetration.

The non-consumable electrode of the cleaning method is preferably a tungsten electrode and has a conventional shape with a gradually reduced end, preferred a tip-like end towards the workpiece. The electrode has preferably a diameter of 1 to 10mm and more preferably from 1 to 5mm. The electrode is preferably surrounded by at least one coaxial processing gas nozzle which introduces a processing gas along the electrode towards the workpiece to enhance the cleaning effect as well as to prevent the arc and the heated area of the workpiece from contacting the atmosphere.

The processing gas is according to the present invention an inert gas as like argon or helium, and could also be a mixture of argon and helium in which the helium has an amount of 1 to 50 vol.-%, preferable 10 to 40 vol.-%, more preferable 20 to 30 vol.-% and the rest is argon. In such a mixture of inert gas as processing gas, helium helps to achieve a better heat dissipation and to control the width of the cleaning zone by the helium admixture since it is more difficult to be ionized than Argon. The processing gas could also contain nitrogen having an amount from 0.01 vol.-% to 5 vol.-%, preferable 1 vol.-% to 4 vol.-% as like 2 or 3 vol.-% and the rest is helium or argon. This processing gas is especially well combined with a relatively low current from 5 to 50 A such as 10 A, 30 A to achieve a great cleaning performance.

The processing gas could be a slightly reducing gas containing gas selected from H2, CO, NO, N2O, CnHm having an amount from 0.01 to 10 vol.-%, preferable from 0.1 to 5 vol.-% and more preferably from 0.1 to 2 vol.-%, which is balanced by an inert gas selected from Ar, He, Xe, Kr, or by a gas mixture which contains inert gas as like argon and nitrogen in which the nitrogen has an amount of 0.5 vol.-% to 5 vol.-% as like 2 vol.-%, 3 vol.-% or 4 vol.-%. Preferably the processing gas consists of H2 and Ar in which H2 has a concentration from 0.1 to 10 vol.-%, preferable from 0.1 to 5 vol.-% and more preferably from 0.1 to 2 vol.-%. Hydrogen as a part of the processing gas can be partially dissolved and partially ionized in the arc during the cleaning process which changes the temperature distribution in the arc and on the cathode. These changes affect the oxide removal with thermal- electro emission, tunnel-electro emission, ion-bombardment etc. In addition, the hydrogen is very oxygen-affine and can thus easily bond to the atomic 02 which is present in the heated zone or is released from oxide layer of the workpiece during the cathodic cleaning process. The application of hydrogen as a part of the processing gas prevents the workpiece from oxidizing under the high temperature and therefore achieves a better quality of the workpiece and a more reliable performance of the cleaning process. The processing gas could also contain a minor active gas selected from CO2, 02 which has a concentration up to 0.1 vol.-%. It could be 100ppm, 200ppm, 300ppm and the rest is inert gas as like argon.

Except this processing gas fed by the at least one coaxial processing gas nozzle, there could be also multiple coaxial gas nozzles surrounding the electrode to provide enveloping gases having the same or different gas composition or flowrate as the processing gas mentioned.

The cleaning method in accordance with the present invention is used to treat the weld generated by a previous welding process. The cleaning method is an independent control the cleaning depth of the oxide layer process which is separated from the previous welding process. The parameters of the cleaning method as like the arc length, current, processing gas composition and flowrate, electrode speed can be therefore set separately from the welding process which enables the cleaning process to clean the oxides more flexible and efficient. By applying this method the operator can adjust the cleaning process performance upon the weld characteristics such as the thickness of the oxide layer to achieve a best cleaning performance. Preferably, the cleaning method is applied on the weld when it is cooled below 200°C, preferably below 100°C, more preferably at usual room temperatures. On specific temperature sensitive materials, the cleaning can be performed on an additionally cooled weldment surface, to even further reduce heat impact from cathodic cleaning.

The workpiece is made of a steel alloy, and preferably made of high alloyed stainless steel. Steels are Fe-C alloys with less than 2% C. High alloyed steels have a total of alloying elements which in sum exceeds 5%. In stainless steels the dominant alloying element is Chromium. Stainless steels obtain their anti-corrosive properties by the uniform Cr oxide layer on the surface.

The workpiece could also be made of a high alloyed material, other than steels. High alloyed materials which are not steels are defined by having one alloying element in a higher concentration than Fe. Preferably this would be a Ni-based alloy. Ni based alloys have Ni as predominant alloying element and this exceeds Fe content.

According to the present invention, this oxide layer on a thermal joint and the adjacent surface area possesses an uneven thickness up to 300nm. The characteristics of the oxide layer are deviated differently which are depends on the workpiece, the type of the welding, the time, the temperature and other relevant parameters. This oxide layer is performed as colorful streaks which have irregular edges and are formed parallel to the weld and also on the weld or in the weld heat-affected zone. As aforementioned the oxide layer is formed due to the high temperature during the process as well as the contact with the oxidizing agent, especially the oxygen in the atmosphere. Thermal oxide layers on the weldment can reduce significantly the corrosion resistance of the workpiece, especially for a high-alloyed metal, and thus affects the quality of the component. This is a consequence of the somehow lowered Chromium concentration below the oxidized surface. Therefore, this oxide layer needs to be removed after the welding process, including the material with reduced Chromium content.

The transferred arc between the electrode and the workpiece produces the concentrated, focused, intense heat at the boundary of the workpiece and its oxide layer. The negatively charged cathode end emits electrons. The energy sources of heating the surface are the Joule heat produced by the current and the impinging plasma particles. The arc is transferred to the workpiece in the so-called "transferred" arc mode. The arc could be formed as a concentrated arc as in a conventional tungsten inert gas welding and could be also formed as a constricted arc as in a plasma welding. The arc has a preferable length 0.5 to 8mm and preferred from 2 to 4mm. The arc end on the surface of the workpiece can align itself automatically with the edge of the oxide layer due to its highest density of energy, so that the oxide layer can be efficiently removed by the cathodic cleaning.

Advantageously, the cathodic cleaning can be adapted to the oxide layer whose properties, as like thickness, moisture, are dependent variable of the previous welding process by adjusting the electrical parameters as like current, voltage, pulse frequency, AC balance, processing gas composition, electrode diameter or geometry, arc length, travelling speed, etc. It should be appreciated for a skilled person that these parameters could be adjusted to provide a desirable arc that facilitates removal of the oxide layer from the workpiece. Both in manual and in automated operational mode, the cleaning intensity and cleaning area can also be controlled by an additional relative movement of the torch versus the weldment to be cleaned. This can be e.g. weaving, rotational movements of the torch.

The cathodic cleaning method in accordance with the present invention enables a reliable and efficient cleaning to remove the oxide, particular the chromium oxide from the workpiece after the welding without costly and dangerous wet chemicals. The application of the cathodic cleaning is advantageous to remove oxide with relatively small area, uneven thickness and unstable property which is dependent of the previous welding. The cathodic cleaning can be independently adjusted from the welding process to remove the oxide layer of the workpiece more efficient and flexible. This is of particular advantage for manual welders who can first conclude a larger number of welds on a component, then change equipment parameter settings to cleaning and use the same equipment for cleaning the welds. For more demanding applications, the use of a specialized cathodic cleaning equipment separate from the one used for welding - is preferred.

Especially for automated fabrication, the cleaning method and the previous welding process could be connected in such a manner that the cleaning is carried out with a predetermined time interval behind the welding process. The welding process is implemented by a welding unit including an electrode and a gas nozzle surrounding the electrode and may include a filler wire as well, wherein the welding unit travels relatively along the joining seam. By relative it means either the welding unit moves along the stationary joining seam or the workpiece moves while the welding unit stays still. The cleaning electrode, or an array of electrodes, can be arranged behind the welding unit with a predetermined distance in the welding direction so that the cleaning and the welding of the workpiece are successively completed in a compact and simple way. The oxide layer on the weld and the heat affected zone is directly removed by the following cleaning process and the welding quality is efficiently increased.

The cleaning device for removing oxides on the workpiece according to the aforementioned method is provided with the non-consumable electrode, at least one gas nozzle to introduce the processing gas towards the workpiece and the power source which electrically communicates the non-consumable electrode and the workpiece.

The cleaning device has preferably a control unit which analyses the input data from the previous welding process and evaluate it and then deliver the evaluated output data to the cleaning unit to adjust the parameter as like the processing gas composition or flowrate to adapt to the variable oxide layer on the welded workpiece.

If necessary or preferred for specific materials, a cooling unit is arranged between the welding unit and the cleaning device to cool the weld before the cleaning process starts. The cooling unit uses gaseous or fluid median to cool down the weld and thus be prepared for the following cleaning process. Alternatively, direct contacting heat conduction, e.g. copper fixings and plates, can be used to extract post weld heat.

Preferably, a trail follows the cleaning device in the welding direction to clean up the workpiece. The workpiece can thus be welded, cleaned and treated in a continuous line to achieve a fast and simple effect.

It should be noted that the previously mentioned features and the features to be further described in the following are usable not only in the respectively indicated combination, but also in further combinations or taken alone, as long as not depart from the scope of the present invention.

The present invention will now be described with reference to the following non-limiting examples and the accompanying schematic figures in which:
Fig.1: a cleaning device to remove the oxides
Fig.2: an oxide layer formed in the welding process
Fig.3: a cleaning device in a vertical position
Fig.4: a continuous line equipped with welding device, cleaning device and a trail.

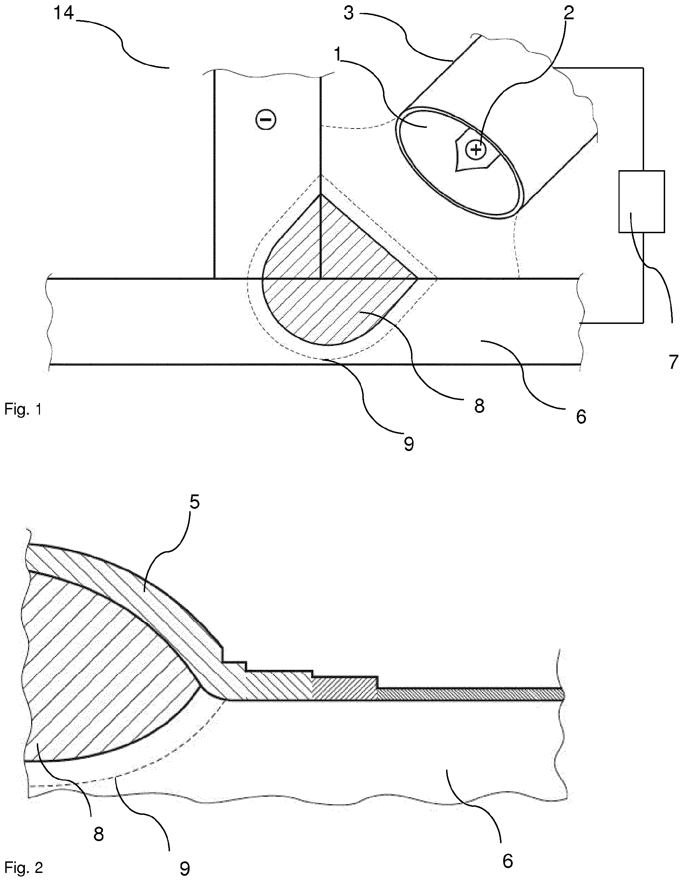

Figure 1 illustrates schematically a cleaning device for removing oxides which are formed during the previous welding process on the weld seam and the heat-affected zone of the workpiece. In this example, the workpiece 6 is a T-shaped piece which is constructed by two base materials which are vertically welded, also known as filet weld. The weld 8 finds itself on the place where the two substrates are connected by welding. The weld heat-affected zone 9 extends from the solidified weld interface to the termination of the sensitizing temperature in the substrates. The oxides are formed in this area in presence of both heat and oxygen. The oxides perform as a discoloration on the weld or the heat affected zone. The different colors (e.g. yellow, red, blue, and grey, colorless) are indicating different thickness of the oxide layers. This is the result of the different exposure of the metal surface to temperature, time and oxidizing agent. All are not desirable as all thermal oxides cause changes of the metallurgical structure and properties of the workpiece which adversely affect its corrosion resistance.

The cleaning device contains a tungsten electrode 2, a gas nozzle 3 surrounding the electrode 2, a power source 7 electrically connecting the electrode 2 and the workpiece 6. The tungsten electrode 2 is anodic connected and the workpiece 6 is cathodic connected. An electric arc is struck between the electrode 2 and the workpiece 6. The end of the arc travels on the oxides to be removed. The gas nozzle 3 is arranged to introduce a processing gas 1 along the electrode 2 towards the workpiece 6. The workpiece is made of steel and preferable made of stainless steel. The oxide to be removed is mainly chromium oxide. The power source 7 generates a DC circuit, aspect not covered by the present invention, and provides a current from 5 to 100 A, preferably 10 to 50A.

After the weld is cooled down below 200°C, preferred to a usual room temperature, the cleaning device is applied to this workpiece 6 to remove the chromium oxides. The arc length generated amounts about 3mm. The cleaning device moves relative to the weld 8 with a speed of 0,1m/min to 6m/min to remove the oxides formed on the weld and in the vicinity of the weld 8.

The processing gas fed by the gas nozzle 3 embraces the arc and the cleaning area.

The composition of the process gas affects electrical arc discharge, plasma behavior, cathodic spot movement and plasma chemical reactions on the metal and metal oxides surface. The processing gas has a flowrate of about 5 to 20l/min, preferable 10 to 15l/min. The composition of the processing gas could be
- Inert gas selected from argon, helium,
- 1 to 50vol.-% helium balanced by argon, preferable 10 to 40vol.-%
- 0.1 to 10vol.-% hydrogen balanced by argon, preferable 0.1 to 5vol.-%, very preferred 0.1 to 2vol.-%
- argon containing a reducing gas selected from CO, NO, N2O, CnHm
- argon containing active gas selected from 02 and CO2 having an amount from 100ppm to 500ppm.
- 0.01 vol.-% to 5 vol.-% nitrogen balanced by argon
- 0.1 to 5 vol.-% hydrogen and 0.5 vol.-% to 5 vol.-% nitrogen balanced by argon

By running the separate cleaning device on the workpiece after its welding process, the parameters of the cleaning device can be separately adjusted depending on the characteristics of the oxides formed. These parameters include the processing gas composition, flowrate, arc length, current, travel speed and so on. The cleaning device is therefore able to remove the oxide and treat the workpiece in a flexible and efficient way.

Figure 2 shows schematic a cross section through chromium oxide layers 5 which are formed on the weld 8 and in the vicinity of the weld 8 on the workpiece 6 in the welding process. The oxide layer 5 has an uneven thickness due to the welding process, different temperatures and exposure times to oxidizing agents. The nearer to the weld 8, the thicker is the oxide layer 5 and the further from the weld 8, the thinner is it. The thickest area of the oxide layer 5 lies on the weld 8 which can have a thickness of about 175 to 275 nm. The thickness reduces gradually from the weld 8 outwards. The thinnest area of the oxide layer 5 has a thickness of about 5nm. During the cleaning process the cathodic foot point of the arc can align itself automatically with the edge of the oxide layer to the steel surface of the workpiece 6 due to its highest density of electric field energy.

Due to the uneven thickness of the chromium oxide layer 5 it is especially beneficial to remove it with the cathodic cleaning method as well as the cleaning device in accordance with the present invention without using any chemicals, mechanical removal or contaminated tools. The oxides can be removed faster, safer and more efficient without costly preparation and post-treatment, without generating dust during the cleaning process in comparison with the prior art.

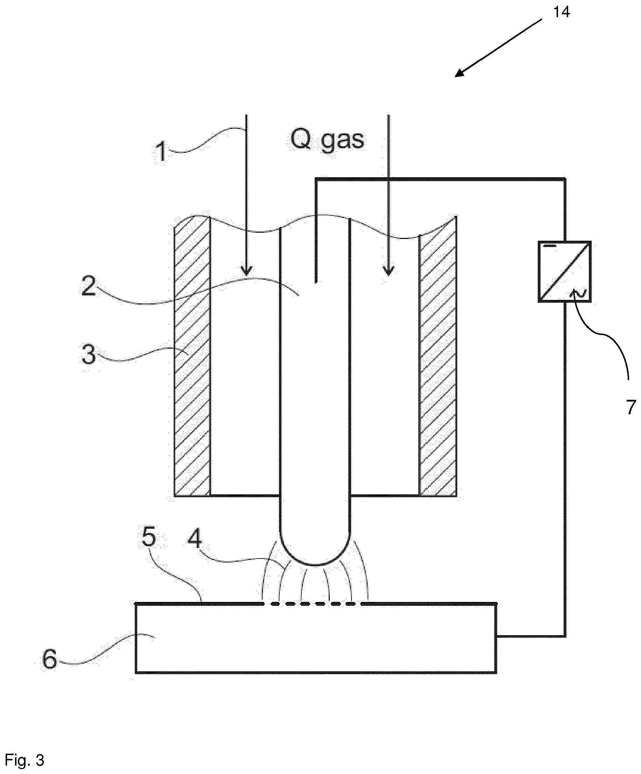

Figure 3 shows schematically the cleaning device employed to treat a workpiece 6 which was welded from two base materials adjacent to each other, also known as but weld. Similar to the device of figure 1, a power source 7 electrically connects the tungsten electrode 2 to the workpiece 6 to generate an electrical arc 4 therebetween, wherein the electrode 2 is anode and the workpiece 6 is cathode. The power source 6 provides a circuit having a current of 10 to 50A. A gas nozzle 3 is arranged surrounding the electrode 2 to introduce a processing gas 1 towards the workpiece 6 to enclose the arc 4, to control the cleaning and protect the area to be treated from surrounding atmosphere.

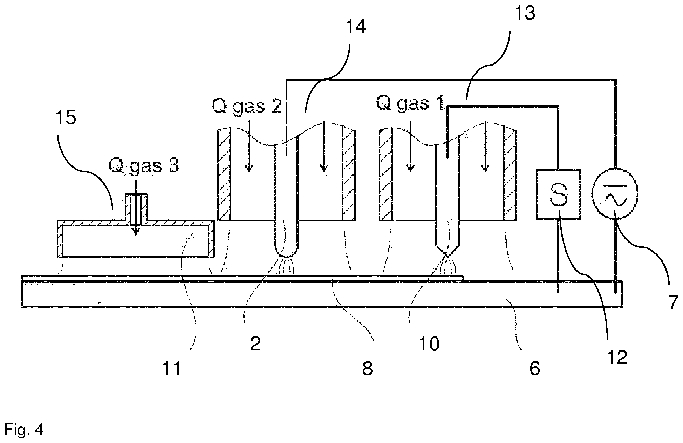

Figure 4 shows an application of the cathodic cleaning device 14 in an automatically continuous line. In this example, the workpiece 6 moves in direction from the welding unit 13 towards a treatment unit 15 to be continuously treated in the production line. The weld interface goes first under the welding unit 13 to be welded and the weld 8 generated goes then under the cleaning device 14 to remove the oxides which is formed during the welding process in the welding unit 13. The welding unit has a power source 12 which electrically connects an electrode 10 and the workpiece 6. The electrode is preferably cathodic connected and the workpiece 6 is anodic connected which built a high heat concentration on the workpiece to facilitate its melting and achieve a deep penetration. The welding unit 13 has straight polarity which is opposite to the polarity of the cleaning device 14. The cleaning device can be set with a predetermined time interval after the welding unit 13 to insure that the oxides can be removed efficiently.

The weld 8 should be preferably cooled below 200°C before being cleaned by the cleaning device 14 to avoid generating extra oxides during the cleaning process. There could be a cooling unit arranged between the welding unit 13 and the cleaning device 14 to cool down the weld 8. After the oxides have been removed by the cleaning device 14 the weld goes further under a post-treatment unit 15 which introduces primarily inert or reducing gas onto the surface to protect it from contacting air and secondary oxidation, but also to further cool down the surface. Alternatively, this treatment unit 15 could be also arranged between the cleaning device 14 and the welding unit 13. By arranging the cooling unit, cleaning device 14 and welding unit 13 in a continuous production line it facilitates the automation of obtaining a good welding quality in an easy and high efficient way.

The cleaning device 14 has preferably a control unit which analyses input data from the welding unit 13 and evaluate it and then deliver the evaluated output data to the cleaning device 14 to be able to adjust the parameters as like the processing gas composition, flowrate, current, electrode speed and so forth to adapt to the oxide layer formed on the workpiece 6 in the previous welding process.

## Claims

1. A method of cleaning a workpiece,wherein the cleaning is conducted by removing oxides from the surface of the workpiece which are formed on the workpiece by a previous thermal joining process, whereinan electric arc is generated between the workpiece and a non-consumable electrode to remove the oxides on the workpiece, wherein a power source is provided to electrically connect the workpiece and the non-consumable electrode and wherein the non-consumable electrode is essentially anodically polarized and the workpiece is essentially cathodically polarized, being **characterised in that** the oxides on the thermal joint and the adjacent surface area possess an uneven thickness up to 300nm, and **in that** the power source generates an alternating current circuit by which the workpiece is polarized anodically for a maximum of 25% of the electrical energy in total, and **in that** a processing gas is introduced along the non-consumable electrode towards the workpiece which contains argon and/or helium, wherein the gas contains at least another reducing gas selected from H2, CO, NO, N2O, CnHm or contains 0.5 to 5 vol. - %, preferable 1 to 4 vol.-% nitrogen which is preferable balanced by argon.

2. .A cleaning method according to one of the preceding claims, **characterized in that** the oxides is formed by a welding or brazing process.

3. A cleaning method according to one of the preceding claims, **characterized in that** the surface of the workpiece is cleaned in such a manner that the cleaning is carried out on the oxides with a predetermined time interval after the oxides are formed.

4. A cleaning method according claim 1, **characterized in that** the gas consists of H2 and Ar in which H2 has an amount of 0.1 to 10 vol.-%, preferable 0.1 to 5 vol.-%.

5. A cleaning method according claim 1, **characterized in that** the gas contains active gas selected from CO2, O2 with an amount up to 0,1vol.-%.

6. A cleaning method according to one of the preceding claims, **characterized in that** the power source provides a current from 5A to 100A, preferable from 10A to 50A.

7. A cleaning method according to one of the preceding claims, **characterized in that** the workpiece is made of steel alloy, preferably stainless steel alloy.

8. A cleaning method according to one of the preceding claims, **characterized in that** the workpiece is made of a high alloyed material, preferably a Ni-based alloy.

9. A cleaning device for removing oxides on a workpiece which are formed by a previous thermal joining process comprises:
- a non-consumable electrode
- at least one gas nozzle surrounding the non-consumable electrode to introduce a processing gas towards the workpiece
- a power source electrically connecting the non-consumable electrode and the workpiece,
- wherein the non-consumable electrode is essentially anode and the workpiece is essentially cathode,
**characterized in that** the power source is configured to generate an alternating current circuit by which the workpiece is polarized anodically for a maximum of 25% of the electrical energy in total.

## Patentansprüche

1. Verfahren zum Reinigen eines Werkstücks, wobei das Reinigen durch Entfernen von Oxiden von der Oberfläche des Werkstücks durchgeführt wird, die durch einen vorherigen thermischen Verbindungsprozess auf dem Werkstück gebildet wurden, wobei ein elektrischer Lichtbogen zwischen dem Werkstück und einer nicht abschmelzenden Elektrode erzeugt wird, um die Oxide auf dem Werkstück zu entfernen, wobei eine Energiequelle bereitgestellt ist, um das Werkstück und die nicht abschmelzende Elektrode elektrisch zu verbinden und wobei die nicht abschmelzende Elektrode im Wesentlichen anodisch polarisiert ist und das Werkstück im Wesentlichen kathodisch polarisiert ist, **dadurch gekennzeichnet, dass** die Oxide auf der thermischen Verbindung und der angrenzenden Oberfläche eine ungleichmäßige Dicke von bis zu 300 nm besitzen, und
**dadurch, dass** die Energiequelle einen Wechselstromkreis erzeugt, über den das Werkstück insgesamt für maximal 25 % der elektrischen Energie anodisch polarisiert wird,
und **dadurch, dass** ein Verarbeitungsgas entlang der nicht abschmelzenden Elektrode in Richtung des Werkstücks eingeleitet wird, das Argon und/oder Helium enthält, wobei das Gas mindestens ein weiteres reduzierendes Gas enthält, das aus H2, CO, NO, N2O, CnHm ausgewählt ist oder 0,5 bis 5 Vol.- %, vorzugsweise 1 bis 4 Vol.- % Stickstoff enthält, was vorzugsweise durch Argon ergänzt wird.

2. Reinigungsverfahren nach einem der vorstehenden Ansprüche, **dadurch gekennzeichnet, dass** die Oxide durch einen Schweiß- oder Lötprozess gebildet ist.

3. Reinigungsverfahren nach einem der vorstehenden Ansprüche, **dadurch gekennzeichnet, dass** die Oberfläche des Werkstücks derart gereinigt wird, dass das Reinigen auf den Oxiden mit einem vorgegebenen Zeitintervall durchgeführt wird, nachdem die Oxide gebildet wurden.

4. Reinigungsverfahren nach Anspruch 1, **dadurch gekennzeichnet, dass** das Gas aus H2 und Ar besteht, wobei H2 eine Menge von 0,1 bis 10 Vol.- %, vorzugweise 0,1 bis 5 Vol.- % aufweist.

5. Reinigungsverfahren nach Anspruch 1, **dadurch gekennzeichnet, dass** das Gas aktives Gas enthält, das aus CO2, 02 mit einer Menge von bis zu 0,1 Vol.- % ausgewählt ist.

6. Reinigungsverfahren nach einem der vorstehenden Ansprüche, **dadurch gekennzeichnet, dass** die Energiequelle einen Strom von 5 A bis 100 A, vorzugsweise von 10 A bis 50 A bereitstellt.

7. Reinigungsverfahren nach einem der vorstehenden Ansprüche, **dadurch gekennzeichnet, dass** das Werkstück aus Stahllegierung, vorzugsweise aus Edelstahllegierung hergestellt ist.

8. Reinigungsverfahren nach einem der vorstehenden Ansprüche, **dadurch gekennzeichnet, dass** das Werkstück aus einem hochlegierten Material, vorzugsweise aus einer Legierung auf Ni-Basis hergestellt ist.

9. Reinigungsvorrichtung zum Entfernen von Oxiden auf einem Werkstück, die durch einen vorherigen thermischen Verbindungsprozess gebildet wurden, umfassend:
- eine nicht abschmelzende Elektrode
- mindestens eine Gasdüse, die die nicht abschmelzende Elektrode umgibt, um Verarbeitungsgas in Richtung des Werkstücks einzuleiten
- eine Energiequelle, die die nicht abschmelzende Elektrode und das Werkstück elektrisch verbindet,
- wobei die nicht abschmelzende Elektrode im Wesentlichen Anode ist und das Werkstück im Wesentlichen Kathode ist,
**dadurch gekennzeichnet, dass** die Stromquelle konfiguriert ist, um einen Wechselstromkreis zu erzeugen, über den das Werkstück insgesamt für maximal 25 % der elektrischen Energie anodisch polarisiert wird.

## Revendications

1. Procédé de nettoyage d'une pièce à travailler, dans lequel le nettoyage est effectué par retrait d'oxydes de la surface de la pièce à travailler qui sont formés sur la pièce à travailler par un processus de jonction thermique précédent, dans lequel un arc électrique est généré entre la pièce à travailler et une électrode non consommable pour retirer les oxydes sur la pièce à travailler, dans lequel une source d'alimentation est fournie pour connecter électriquement la pièce à travailler et l'électrode non consommable et dans lequel l'électrode non consommable est essentiellement polarisée de façon anodique et la pièce à travailler est essentiellement polarisée de façon cathodique, étant **caractérisé en ce que** les oxydes sur le joint thermique et la zone de surface adjacente possèdent une épaisseur irrégulière allant jusqu'à 300 nm, et
**en ce que** la source d'alimentation génère un circuit de courant alternatif par lequel la pièce à travailler est polarisée de façon anodique pour un maximum de 25 % de l'énergie électrique au total,
et **en ce qu'**un gaz de traitement est introduit le long de l'électrode non consommable vers la pièce à travailler qui contient de l'argon et/ou de l'hélium, dans lequel le gaz contient au moins un autre gaz réducteur choisi parmi H2, CO, NO, N2O, CnHm ou contient 0,5 à 5 % en vol., de préférence 1 à 4 % en vol. d'azote qui est de préférence équilibré par de l'argon.

2. Procédé de nettoyage selon l'une des revendications précédentes, **caractérisé en ce que** les oxydes est formé par un processus de soudage ou de brasage.

3. Procédé de nettoyage selon l'une des revendications précédentes, **caractérisé en ce que** la surface de la pièce à travailler est nettoyée de telle manière que le nettoyage est réalisé sur les oxydes avec un intervalle de temps prédéterminé après la formation des oxydes.

4. Procédé de nettoyage selon la revendication 1, **caractérisé en ce que** le gaz est constitué de H2 et Ar dans lequel H2 a une quantité de 0,1 à 10 % en vol., de préférence 0,1 à 5 % en vol.

5. Procédé de nettoyage selon la revendication 1, **caractérisé en ce que** le gaz contient du gaz actif choisi parmi CO2, 02 avec une quantité allant jusqu'à 0,1 % en vol.

6. Procédé de nettoyage selon l'une des revendications précédentes, **caractérisé en ce que** la source d'alimentation fournit un courant de 5 A à 100 A, de préférence de 10 A à 50 A.

7. Procédé de nettoyage selon l'une des revendications précédentes, **caractérisé en ce que** la pièce à travailler est faite en alliage d'acier, de préférence en alliage d'acier inoxydable.

8. Procédé de nettoyage selon l'une des revendications précédentes, **caractérisé en ce que** la pièce à travailler est faite en un matériau fortement allié, de préférence un alliage à base de Ni.

9. Dispositif de nettoyage pour retirer des oxydes sur une pièce à travailler qui sont formés par un processus de jonction thermique précédent comprenant :
- une électrode non consommable
- au moins une buse de gaz entourant l'électrode non consommable pour introduire un gaz de traitement vers la pièce à travailler
- une source d'alimentation connectant électriquement l'électrode non consommable et la pièce à travailler,
- dans lequel l'électrode non consommable est essentiellement anode et la pièce à travailler est essentiellement cathode,
**caractérisé en ce que** la source d'alimentation est configurée pour générer un circuit de courant alternatif par lequel la pièce à travailler est polarisée de façon anodique pour un maximum de 25 % de l'énergie électrique au total.
